# EUROPÄISCHE PATENTANMELDUNG

(11) **EP 3 957 579 A1**
(43) Veröffentlichungstag der Anmeldung: **23.02.2022**
(21) Anmeldenummer: 20191803.4
(22) Anmeldetag: 19.08.2020
(51) Int. Cl.: B65D 85/804

(54) **PORTIONENKAPSELGRUNDKÖRPER UND PORTIONENKAPSEL FÜR EINE GETRÄNKEZUBEREITUNGSMASCHINE UND ZUGEHÖRIGE VERFAHREN**

(71) Anmelder: Tchibo GmbH, 22297 Hamburg (DE)
(72) Erfinder: TERNITE, Rüdiger, 21149 Hamburg (DE)
(74) Vertreter: Frei Patent Attorneys

(57) **Zusammenfassung**

Der Portionenkapselgrundkörper (2) definiert eine gerichtete Achse (A) und ist befüllbar mit einem Extraktionsgut. Er weist auf
- einen Bodenbereich (5);
- eine an den Bodenbereich (5) anschliessende umlaufende Seitenwand (6), die eine Aussenfläche (6a) aufweist; und
- einen an die Seitenwand (6) anschliessenden umlaufenden Kragenbereich (7), durch den eine Öffnung (8) definiert ist.

Die Achse (A) ist zentral durch den Bodenbereich (5) und durch die Öffnung (8) verlaufend und definiert eine von dem Bodenbereich (5) durch die Öffnung (8) zeigende Achsenrichtung. Ein senkrecht zur Achse (A) gemessener Abstand wird als Achsabstand (r) bezeichnet, und die Seitenwand (6) weist mindestens ein Rampenelement (10) auf, durch das mindestens ein Rampenbereich (11) definiert ist, in welchem der Achsabstand (r) der Aussenfläche (6a) entlang der Achsenrichtung zunehmend ist.

## Beschreibung

Die Erfindung betrifft die Zubereitung von Getränken oder dergleichen aus einem in einer Kapsel (Portionenkapsel) enthaltenen Extraktionsgut, beispielsweise gemahlenem Kaffee. Sie bezieht sich auf Vorrichtungen und Verfahren gemäss den Gattungsbegriffen der Patentansprüche, insbesondere auf eine Portionenkapsel, auf einen Portionenkapselgrundkörper sowie auf eine Kombination einer Portionenkapsel und einer Getränkezubereitungsmaschine und auch auf ein Verfahren zum Betreiben einer Getränkezubereitungsmaschine sowie auf eine Verwendung einer Portionenkapsel. Getränkezubereitungsmaschinen zum Zubereiten von Getränken oder dergleichen aus einem in einer Portionsverpackung vorhandenen Extraktionsgut sind unter anderem als Kaffee- oder Espressomaschinen bekannt. Aufgrund des Extraktionsvorgangs zur Herstellung des Getränkes können sie auch als Extraktionsgeräte bezeichet werden. In vielen entsprechenden Systemen sind die Portionsverpackungen als Kapseln (Portionskapseln) ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite (Injektorseite) wird dann eine Extraktionsflüssigkeit - meist heisses Wasser - eingeleitet. Auf der zweiten Seite (Ausleitungsseite oder Extraktorseite) wird das Extraktionsprodukt aus der Kapsel ausgeleitet. Dies geschieht in einem sogenannten Brühmodul. Ein solches weist eine Brühkammer auf, in der die Kapsel aufgenommen wird. Je nach zuzubereitendem Getränk und System muss beim Brühvorgang im Innern der Kapsel ein recht erheblicher Druck herrschen. Alternativ zu Systemen, bei denen die Portionenkapsel angestochen wird, gibt es auch Systeme mit Kapseln, die bereits mit einer Perforation versehen sind, welche bspw. von einer Schutzfolie überdeckt sind, die vor dem Brühprozess abgezogen oder aufgelöst wird.

Besonders beliebt sind Brühmodule, bei welchen die Kapsel eingeworfen wird und die Brühkammer bspw. mittels eines Bedienhebels oder mittels eines Motors verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind meist als horizontale Brühmodule ausgebildet, d.h. der Kapseleinwurf erfolgt von oben, das Verschliessen der Brühkammer findet durch eine horizontale Relativbewegung zweier Brühmodulteile (Injektor und Ausleiteinheit) statt, die Brühflüssigkeit fliesst im wesentlichen horizontal, und der Kapselbehälter ist unterhalb der Brühkammer ausgebildet.

Bei Brühmodulen dieser Art ist sicherzustellen, dass die eingeworfene Kapsel gehalten wird, bis die Brühkammer verschlossen ist, dass sie aber nach unten fällt, wenn die Brühkammer nach dem Brühprozess wieder geöffnet wird.

WO 2015/048914 beschreibt ein Brühmodul aufweisend einen Extraktor (Ausleitvorrichtung; erstes Brühmodulteil) und einen relativ dazu bewegbaren Injektor (zweites Brühmodulteil), wobei der Extraktor einen Kopf mit als seitlichen Führungsmitteln ausgebildeten mechanischen Kontrollelementen aufweist, welche eine erste und eine zweite Bahn für einen Kapselkragen definieren, und wobei der Extraktor ferner eine Auflage bildet, welche eine Bewegung der Kapsel nach unten begrenzt, wenn der Kapselkragen sich auf der ersten Bahn befindet. Desweiteren sind die seitlichen Führungsmittel mit dem Kopf verbunden, und der Injektor weist ein als ein Rückholelement ausgebildetes mechanisches Kontrollelement auf, welches dazu ausgebildet ist, beim Öffnen der Brühkammer am Kapselkragen anzugreifen und diesen in die zweite Bahn zu bewegen.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz. Sowohl Aluminium als auch Kunststoffe sind als Kapselmaterialien in der Kritik, erstere insbesondere wegen des hohen Energieverbrauchs bei der Herstellung, letztere insbesondere wegen der Abfallproblematik.

Aus der WO 2010/118543 ist eine Kaffee-Portionenkapsel bekannt, welche näherungsweise eine Würfelform aufweist, aus Kunststoff gefertigt ist und im Unterschied zu den bekannten becherförmigen Kapseln keinen auf der Ebene der einen oberseitigen Deckfläche umlaufenden Kragen aufweist. Ein solcher umlaufender Kragen wird bei anderen bekannten Kapselsystemen unter anderem zum Verschliessen der Kapsel durch einen eine als Deckel dienende Folie benötigt. Beim Verschliessen mittels Ultraschallschweissen braucht es den Kragen, um einen Energierichtungsgeber unterzubringen. Wird die Kapsel durch thermisches Versiegeln verschlossen, ist der Kragen nötig, damit der Deckel auf einer genügend grossen Fläche aufliegt. Im Gegensatz dazu wird gemäss der genannten WO 2010/118543 ein gewölbter Deckel verwendet, und das Verschliessen erfolgt bspw. mittels Ultraschall-Trennschweissen. Die gemäss der Lehre der WO 2010/118543 hergestellte Kapsel setzt sich aus einem Kapselgrundkörper (mit Bodenbereich, Seitenwand und Kragenbereich) und einem Deckel zusammen und hat demnach unabhängig von ihrer ("Würfel"-) Form eine zwischen den durch die untere und obere Deckflächen definierten Ebenen angeordnete, umlaufende Schweissbraue, die einen nur minimalen Kragen bildet und deren Ausdehnung/seitliches Vorstehen jedoch im Vergleich zum Kragen bekannter Kapseln deutlich reduziert ist.

Als Kapselmaterialien sind auch sogenannte Bio-Kunststoffe diskutiert worden. Als solche werden einerseits Kunststoffe bezeichnet, die aus einem nachwachsenden Rohstoff gefertigt sind (sogenannte biobasierte Kunststoffe). Anderseits können Bio-Kunststoffe Kunststoffe sein, die biologisch abbaubar sind (sogenannt bioabbaubare Kunststoffe). Die für die Herstellung von Portionenkapseln vorgeschlagenen Kunststoffe sind bioabbaubar, und manche beinhalten einen Anteil von biobasierten Kunststoffen.

Im vorliegenden Text bedeutet "bioabbaubar" biologisch abbaubar gemäss der Norm EN13432 (Stand: Ende 2019), und "biobasiert" bedeutet "aus nachwachsenden Rohstoffen, nicht auf fossiler Basis gefertigt".

Die erhältlichen Bio-Kunststoffe, insbesondere bioabbaubaren Kunststoffe, haben die Eigenschaft, dass sie schon bei relativ tiefen Temperaturen erweichen und also schon bei tiefen Temperaturen eine gewisse Fliessfähigkeit haben (tiefe Glasübergangstemperatur), dass sie aber doch recht hoch erhitzt werden müssen, bis sie vollständig fliessfähig sind (d.h. die Schmelztemperatur, soweit definiert, ist nicht besonders tief). Das Erweichen schon bei relativ tiefen Temperaturen bringt beim Brühvorgang mit einer heissen Flüssigkeit einen Verlust an mechanischer Stabilität der Kapsel mit sich. Und wenn beim Brühvorgang im Inneren der Kapsel ein recht erheblicher Druck herrscht, muss die Kapsel so gestaltet sein, dass ihre mechanische Stabilität ausreichend gross ist.

In WO 2017/017704 sind Kapseln aus bioabbaubarem Material beschrieben, die Verstärkungsmittel aufweisen, um eine mechanische Stabilität der Kapsel sicherzustellen, die ein Beaufschlagen der Kapsel mit hohen Innendrücken ermöglicht. Beispielsweise kann auf der Aussenfläche der Seitenwand der Kapsel fadenförmiges Material spiralförmig aufgebracht sein.

Auch aus WO 2016/087981 sind Kapseln mit Verstärkungsmitteln bekannt. Dort sind an der Seitenwand der Kapsel parallel zur Kapselachse verlaufende Profilierungen vorgesehen.

Desweiteren weisen die meisten erhältlichen Bio-Kunststoffe, insbesondere bioabbaubaren Kunststoffe, bei Raumtemperatur einen E-Modul auf, der deutlich grösser ist als der E-Modul von Kunststoffen, die herkömmlicherweise als Kapselmaterial verwendet werden. Beispielsweise liegt der E-Modul von Polypropylen typischerweise zwischen 1000 Pa und 2000 Pa, während der E-Modul einiger Bio-Kunststoffe über 4000 Pa liegt. Entsprechend weisen gleichgestaltete Kapseln aus einem solchem Bio-Kunststoff bei Raumtemperatur eine geringere Verformbarkeit auf als Kapseln aus Polyproplylen.

Hinzu kommt, dass die meisten erhältlichen Bio-Kunststoffe, insbesondere bioabbaubaren Kunststoffe, bei Raumtemperatur eine grössere Sprödigkeit aufweisen als Kunststoffe, die herkömmlicherweise als Kapselmaterial verwendet werden.

Darum sind diese Eingenschaften bei der Ausgestaltung von Kapseln aus Bio-Kunststoffen zu beachten.

Es ist eine mögliche Aufgabe der Erfindung, eine Portionenkapsel und einen Portionenkapselgrundkörper zu schaffen, welche aus Kunststoffen gefertigt sein können, die relativ spröde sind und/oder einen relativ hohen E-Modul aufweisen; insbesondere wobei die Portionenkapsel in bereits existierenden Getränkezubereitungsmaschinen verwendbar sein sollen. Insbesondere soll Eine weitere mögliche Aufgabe der Erfindung ist es, eine Portionenkapsel und einen Portionenkapselgrundkörper zu schaffen, welche es erlauben, Bewegungen der Portionenkapsel in einer Brühkammer einer Getränkezubereitungsmaschine zu ermöglichen, für welche eine maximal aufzuwendende Kraft relativ gering ist.

Eine weitere mögliche Aufgabe der Erfindung ist es, eine Portionenkapsel und einen Portionenkapselgrundkörper zu schaffen, durch welche ein Nutzer, der Bewegungen der Portionenkapsel in der Brühkammer von Hand erzeugt, ein besonders geschmeidiges und/oder ruckarmes Nutzererlebnis hat.

Eine weitere mögliche Aufgabe der Erfindung ist es, eine Portionenkapsel und einen Portionenkapselgrundkörper zu schaffen, durch welche Bewegungen der Portionenkapsel in der Brühkammer besonders leichtgängig und/oder ruckarm erzeugt werden können, insbesondere von Hand.

Eine weitere mögliche Aufgabe der Erfindung ist es, eine Portionenkapsel und einen Portionenkapselgrundkörper zu schaffen, welche es ermöglichen, einen Antrieb, beispielsweise einen Elektromotor einzusetzen, der eine relativ geringe Maximalkraft hat.

Eine weitere mögliche Aufgabe der Erfindung ist es, eine entsprechende Kombination aufweisend eine Portionenkapsel und eine Getränkezubereitungsmaschine zu schaffen.

Eine weitere mögliche Aufgabe der Erfindung ist es, ein entsprechendes Verfahren zum Betreiben einer Getränkezubereitungsmaschine zu schaffen.

Eine weitere mögliche Aufgabe der Erfindung ist es, eine Verwendung einer Portionskapsel zur Verringerung einer maximal aufzuwendenden Kraft für das Erzeugen einer Relativbewegung der Portionenkapsel in einer Brükammer einer Getränkezubereitungsmaschine zu schaffen.

Mindestens eine dieser Aufgaben wird zumindest teilweise durch Vorrichtungen, Verfahren und Verwendungen gemäss den Patentansprüchen gelöst.

Zur Kontrolle von Bewegungen einer Portionenkapsel in einer Brühkammer einer Getränkezubereitungsmaschine kann es sinnvoll sein, ein mechanisches Kontrollelement, beispielsweise einen mechanisch vorgespannten Hebelarm, über die Seitenwand der Portionenkapsel zu bewegen, bis ein Wirkbereich des mechanischen Kontrollelementes über den vorkragenden Kapselkragen herüber bewegt ist. Ein solcher Vorgang kann zum Beispiel in einer Getränkezubereitungsmaschine stattfinden, wie sie in der eingangs erwähnten WO 2015/048914 beschrieben ist. Zum Beispiel kann das mechanische Kontrollelement ein Rückholement sein, das es erlaubt, die Portionenkapsel zurückzuziehen von einer Brühposition in eine Auswurfposition.

Um das mechanische Kontrollelement über den Kapselkragen hinüber bewegen zu können, ist in der Regel eine grössere Kraft (Maximalkraft) nötig als für das vorgängige Entlangbewegen des Wirkbereich des mechanischen Kontrollelementes an der Seitenwand des Portionskapselgrundkörpers. Eine Verringerung dieser Maximalkraft ermöglicht es, einen schwächeren oder kleiner dimensionierten Motor zu nutzen und/oder den Kraftaufwand, den ein Nutzer im Falle von Handbedienung zu betreiben hat, zu reduzieren.

Je nach Kapselmaterial und/oder -design kann bei dem Entlangbewegen des Wirkbereichs des mechanischen Kontrollelementes an der Seitenwand des Portionskapselgrundkörpers und/oder bei dem Bewegen des Wirkbereich des mechanischen Kontrollelementes über den vorkragenden Kapselkragen herüber aufgrund der mechanischen Vorspannung des mechanischen Kontrollelementes ein mehr oder weniger starkes Verformen der Portionskapsel stattfinden. Dadurch kann die notwendige Maximalkraft verringert werden.

Wenn nun die Portionenkapsel aus einem Material gefertigt wird, das einen relativ hohen E-Modul aufweist und sich somit unter den beschriebenen Umständen nur relativ wenig verformt, so wird die notwendige Maximalkraft relativ gross sein. Entsprechend würde ein relativ starker Motor notwendig bzw. müsste ein Nutzer im Falle von manuellem Betrieb eine grössere Kraft aufwenden.

Die Erfinder haben diese Zusammenhänge erkannt und auch eine Lösung dafür gefunden.

An der Portionenkapsel, genauer an dem Portionenkapselgrundkörper wird mindestens ein Rampenelement vorgesehen. Anstatt dass - ohne Rampenelement - das mechanische Kontrollelement «plötzlich» um den vollen, durch den der Kapselkragen gebildeten Überstand hinüberbewegt werden muss, kann das mechanische Kontrollelement mittels des Rampenelementes schon vorher nach aussen gedrückt werden, so dass beim Erreichen des Kapselkragens einerseits das mechanische Kontrollelement schon weit nach aussen gedrückt ist und/oder andererseits die Seitenwand des Portionenkapselgrundkörpers schon ein wenig zusammengedrückt ist. Beide Effekte bewirken, dass die maximale Kraft, die für die Bewegung benötigt wird (insbesondere nämlich beim Bewegen des Wirkbereichs des mechanischen Kontrollelements über den Kapselkragens hinüber) geringer ausfällt als es ohne das Rampenelement der Fall wäre.

Insbesondere kann der Portionenkapselgrundkörper eine gerichtete Achse definieren und mit einem Extraktionsgut befüllbar sein sowie aufweisen:
- einen Bodenbereich;
- eine an den Bodenbereich anschliessende umlaufende Seitenwand, die eine Aussenfläche aufweist; und
- einen an die Seitenwand anschliessenden umlaufenden Kragenbereich, durch den eine Öffnung definiert ist;
wobei die Achse zentral durch den Bodenbereich und durch die Öffnung verlaufend ist und eine von dem Bodenbereich durch die Öffnung zeigende Achsenrichtung definiert, und wobei ein senkrecht zur Achse gemessener Abstand als Achsabstand bezeichnet wird, wobei die Seitenwand mindestens ein Rampenelement aufweist, durch das mindestens ein Rampenbereich definiert ist, in welchem der Achsabstand der Aussenfläche entlang der Achsenrichtung kontinuierlich oder diskontinuierlich zunehmend ist.

Der Achsabstand kann kontinuierlich zunehmend sein. In anderen Ausführungsformen ist er Achsabstand diskontinuierlich zunehmend.

Die Aussenfläche im Rampenbereich kann eine Gleitfläche für ein mechanisches Kontrollelement bilden.

Das Rampenelement kann eine Rampe bilden, um ein Bewegen eines mechanischen Kontrollelementes auf einen Kapselkragen (der gefüllten und dicht verschlossenen Portionenkapsel) herauf und über diesen hinüber zu vereinfachen bzw. um die dafür erforderliche Maximalkraft zu verringern.

Der Kragenbereich kann nach aussen (also von der Achse weg) überstehend sein gegenüber der Seitenwand, zumindest dort, wo, angrenzend an den Kragenbereich, kein Rampenelement vorgesehen ist.

Der Rampenbereich kann, antiparallel zu der Achsenrichtung, sich verjüngend ausgebildet sein.

In manchen Ausführungsformen ist der mindestens eine Rampenbereich an einem Kragenbereich-seitigem Ende der Seitenwand angeordnet. Insbesondere kann der mindestens eine Rampenbereich an den Kragenbereich angrenzend sein.

Das Rampenelement kann nahe dem Kragenbereich angeordnet sein. Es kann an den Kragenbereich angrenzend sein, insbesondere kann es direkt an den Kragenbereich angrenzend sein.

In manchen Ausführungsformen ist das Rampenelement umlaufend.

In manchen anderen Ausführungsformen erstreckt sich das Rampenelement nur über einen Teil eines Umfangs der Seitenwand. In solchen Fällen, in denen das Rampenelement oder Rampenelemente jeweils ein solches sektorielles Rampenelement sind, können umfangsmässig angrenzende Bereiche der Seitenwand frei sein von Rampenelementen und anders ausgestaltet sein, insbesondere wenn Rampenelemente dort stören würden, zum Beispiel indem sie ein Zusammenwirken anderer mechanischer Kontrollelemente mit der Portionenkapsel stören würden.

In manchen Ausführungsformen ist das mindestens eine Rampenelement, bezüglich seiner axialen Erstreckung (Erstreckung entlang der Achse), nur über einen Teil der Seitenwand erstreckt. Insbesondere kann es von dem Bodenbereich beabstandet sein.

In manchen Ausführungsformen weist die Seitenwand zwei an das mindestens eine Rampenelement umfangsmässig anschliessende Seitenwandbereiche auf, und das mindestens eine Rampenelement ist (insbesondere bei gleicher axialer Position) gegenüber den beiden Seitenwandbereichen nach aussen hervorstehend, hat also aussen einen grösseren Achsabstand als die Seitenwandbereiche. Das mindestens eine Rampenelement kann umfangsmässig zwischen den beiden Seitenwandbereichen angeordnet sein.

In dieser Schrift bedeutet «nach aussen» soviel wie «in einer Richtung, in der der Achsabstand zunehmend ist».

In manchen Ausführungsformen weist die Seitenwand zwei an das mindestens eine Rampenelement umfangsmässig anschliessende Seitenwandbereiche auf, in denen die Aussenfläche einen geringeren Achsabstand hat als in dem mindestens einen Rampenbereich.

In manchen Ausführungsformen weist der Kragenbereich gegenüber der Aussenfläche im Bereich des mindestens einen Rampenbereichs einen Überstand auf (nach aussen), der geringer ist, als ein Überstand (nach aussen), den der Kragenbereich in Bereichen ausserhalb des mindestens einen Rampenelements aufweist, insbesondere den der Kragenbereich in Bereichen aufweist, die an das mindestens eine Rampenelement angrenzend sind.

In manchen Ausführungsformen weist die Seitenwand mindestens ein erstes und ein zweites Rampenelement auf, die einander bezüglich der Achse gegenüberliegend angeordnet sind. Insbesondere kann dabei der Rampenbereich des zweiten Rampenelements gleichartig ausgebildet sein wie der Rampenbereich des ersten Rampenelements. Zum Beispiel kann vorgesehen sein, dass sich der Rampenbereich des zweiten Rampenelements durch eine Rotation um 180° um die Achse in den Rampenbereich des ersten Rampenelements überführen lässt. Und/oder es kann vorgesehen sein, dass sich der Rampenbereich des zweiten Rampenelements durch eine Spiegelung an einer die Achse enthaltenden Ebene in den Rampenbereich des ersten Rampenelements überführen lässt. Eine derartige Anordnung und Ausbildung (Ausführung) der Rampenbereiche kann auch für die Rampenelemente vorgesehen sein.

In manchen Ausführungsformen weist die Seitenwand mindestens zwei Rampenelemente auf, wobei die Rampenelemente jeweils paarweise einander gegenüberliegend angeordnet sind bezüglich einer die Achse enthaltenden Ebene.

In manchen Ausführungsformen weist die Seitenwand mindestens zwei Paare von Rampenelementen auf, wobei das erste Paar gegenüber dem zweiten Paar spiegelbildlich angeordnet ist bezüglich einer Ebene, die die Achse enthält. Insbesondere kann der Rampenbereich eines ersten Rampenelements des zweiten Paares gleichartig ausgebildet sein wie der Rampenbereich eines ersten Rampenelements des ersten Paares und der Rampenbereich eines zweiten Rampenelements des zweiten Paares gleichartig ausgebildet sein wie der Rampenbereich eines zweiten Rampenelements des ersten Paares. Insbesondere können die Rampenelemente der Paare so ausgebildet sein, dass sich die Rampenbereiche der Rampenelemente des ersten Paares durch eine Rotation um 180° um die Achse in die Rampenbereiche der Rampenelemente des zweiten Paares überführen lassen. Eine derartige Anordnung und Ausbildung (Ausführung) der Rampenbereiche kann auch für die Rampenelemente vorgesehen sein. Es kann vorgesehen sein, dass alle Rampenbereiche der Paare von Rampenelementen und ggf. auch die Rampenelemente selber gleichartig ausgebildet sind.

In manchen Ausführungsformen weist der Portionenkapselgrundkörper mindestens vier Rampenelemente auf, wobei die Rampenbereiche, und optional auch die Rampenelemente so angeordnet und ausgebildet sind, dass sie sich durch eine Rotation um 90° um die Achse ineinander überführen lassen. Eine solche vierfache Symmetrie kann es ermöglichen, das Einführen der Kapsel in eine Getränkezubereitungsmaschine bzw. in ein Brühmodul zu vereinfachen, insbesondere indem ein Nutzer nicht oder, nicht zusätzlich aufgrund der Rampenelemente, auf eine spezielle Ausrichtung der Kapsel beim Einführen achten muss. Das kann besonders für Portionenkapselgrundkörper und Portionenkapseln mit zumindest annähernder vierfacher Symmetrie vorteilhaft sein, beispielsweise im Falle von Portionenkapselgrundkörpern bzw. Portionenkapseln mit ungefähr quadratischem Grundriss in einer Ebene senkrecht zu der Achse. Zum Beispiel können die Portionenkapseln, abgesehen von dem mindestens einen Rampenelement so ausgebildet sein wie oben bezüglich der WO 2010/118543 beschrieben.

In manchen Ausführungsformen wird, für jede Richtung senkrecht zur Achse, das mindestens eine Rampenelement von dem Kragenbereich nach aussen überragt oder ist maximal gleich weit nach aussen ragend wie der Kragenbereich.

In manchen Ausführungsformen gilt für jede Richtung senkrecht zu der Achse in dem mindestens einen Rampenbereich, dass ein dortiger maximaler Achsabstand der Aussenfläche in dem Rampenbereich höchstens gleich gross ist wie ein dortiger maximaler Achsabstand in dem Kragenbereich.

In manchen Ausführungsformen weist der Kapselkragen gegenüber der Aussenfläche im Bereich des mindestens einen Rampenbereichs einen Überstand auf (nach aussen), der null beträgt und/oder geringer ist als ein Überstand (nach aussen), den der Kapselkragen in Bereichen ausserhalb des mindestens einen Rampenelements aufweist, insbesondere den der Kragenbereich in Bereichen aufweist, die an das mindestens eine Rampenelement angrenzend sind.

In manchen Ausführungsformen weist der Kapselkragen gegenüber der Aussenfläche im Bereich des mindestens einen Rampenbereichs einen Überstand auf (nach aussen), der null beträgt und/oder weniger beträgt als die Hälfte und insbesondere als ein Drittel eines Überstandes (nach aussen), den der Kapselkragen in Bereichen ausserhalb des mindestens einen Rampenelements aufweist, insbesondere den der Kragenbereich in Bereichen aufweist, die an das mindestens eine Rampenelement angrenzend sind.

Die Öffnung kann eine Einfüllöffnung sein, insbesondere zum Einfüllen von Extraktionsgut, wie zum Beispiel gemahlenem Kaffee.

Die Achse kann auch als Zentralachse bezeichnet werden.

Das kontinuierliche oder diskontinuierliche Zunehmen des Achsabstandes im Rampenbereich kann sich insbesondere beziehen auf ein Zunehmen des Achsabstandes bei ein und derselben Richtung senkrecht zur Achse.

Im Falle des diskontinuierlichen Zunehmens können zum Beispiel mehrere Vorsprünge vorgesehen sein, die in Achsenrichtung aufeinanderfolgend angeordnet sind. Dabei können jeweilige maximale Achsabstände, die die einzelnen Vorsprünge aufweisen, umso grösser sein, je näher der Vorsprung dem Kragenbereich ist. Es können also mehrere Vorsprünge vorgesehen sein, die jeweils einen maximalen Achsabstand aufweisen, wobei diese jeweiligen maximalen Achsenabstände parallel zur Achsenrichtung (von Vorsprung zu Vorsprung) zunehmend sind. Die Vorsprünge können als Wulste ausgebildet sein. Die Vorsprünge können entlang der Achse voneinander beabstandet sein. Alternativ können sie zusammenhänged sein.

In manchen Ausführungsformen ist der Portionenkapselgrundkörper aus einem Bio-Kunststoff gefertigt.

In manchen Ausführungsformen ist der Portionenkapselgrundkörper einstückig ausgebildet.

In manchen Ausführungsformen ist das mindestens eine Rampenelement in ein und demselben Herstellungsprozess gefertigt wie der Rest des Portionenkapselgrundkörpers. Das ermöglicht eine effiziente und damit kostengünstige Fertigung, während die Alternative, also das separate Herstellen von Rampenelement Rest des Portionenkapselgrundkörpers auch möglich, aber in der Regel aufwendiger ist.

In manchen Ausführungsformen ist der Portionenkapselgrundkörper mittels Tiefziehen gefertigt.

In manchen Ausführungsformen ist der Portionenkapselgrundkörper mittels Spritzgiessen gefertigt. Ausser Ein-Komponenten-Spritzgiessen kann auch Zwei-odermehr-Komponenten-Spritzgiessen infrage kommen, insbesondere wenn das mindestens eine Rampenelement aus einem anderen Material gefertigt wird als zum Beispiel der Rest des Portionenkapselgrundkörpers. Letzteres kann beispielsweise von Vorteil sein, wenn das mindestens eine Rampenelement andere mechanische Eigenschaften haben soll als der Rest des Portionenkapselgrundkörpers, zum Beispiel wenn das mindestens eine Rampenelement leichter verformbar sein soll.

Die Portionenkapsel kann einen mit einem Extraktionsgut befüllten Portionenkapselgrundkörper der hierin beschriebenen Art aufweisen sowie einen mit dem Portionenkapselgrundkörper im Kragenbereich dichtend verbundenen Deckel, insbesondere luftdicht dichtend verbundenen Deckel.

Der Deckel kann insbesondere ein gewölbter Deckel sein, beispielsweise wie oben für die genannte WO 2010/118543 beschrieben.

Die Portionenkapsel kann einen Kapselkragen aufweisen. Insbesondere kann, für jede Richtung senkrecht zu der Achse, das mindestens eine Rampenelement von dem Kapselkragen nach aussen überragt werden oder maximal gleich weit nach aussen ragend sein wie der Kapselkragen.

Für jede Richtung senkrecht zu der Achse in dem mindestens einen Rampenbereich kann gelten, dass ein dortiger maximaler Achsabstand der Aussenfläche in dem Rampenbereich höchstens gleich gross ist und insbesondere gleich gross ist wie ein dortiger maximaler Achsabstand des Kapselkragens.

Der Kapselkragen kann umlaufend sein.

An dem Kapselkragen kann der Deckel mit dem Portionenkapselgrundkörper dichtend verbunden sein.

Der Kapselkragen kann zwischen einer oberseitigen Deckfläche der Portionenkapsel (gebildet durch den Deckel) und dem Bodenbereich (des Portionenkapselgrundkörpers) vorgesehen sein; beispielsweise so, wie es für die eingangs genannte WO 2010/118543 oben beschrieben ist.

Die Portionenkapsel kann insbesondere die oben für die WO 2010/118543 beschriebene Form aufweisen - abgesehen von dem mindestens einen Rampenelement.

In manchen Ausführungsformen beträgt ein Überstand des Kapselkragens (senkrecht zur Achse ausserhalb der Rampenelemente) zwischen 0.5 mm und 2.5 mm, insbesondere zwischen 0.8 mm und 2 mm, beispielsweise zwischen 1 mm und 1.5 mm. Es ist dies also der Überstand gegenüber der Aussenfläche in Bereichen ohne ein Rampenelement.

Die Kombination kann eine Portionenkapsel der hierin beschriebenen Art sowie eine Getränkezubereitungsmaschine zur Aufnahme der Portionenkapsel aufweisen: Dabei kann die Getränkezubereitungsmaschine eine Brühkammer mit einem Injektor und einer Ausleiteinheit aufweisen.

Die Ausleiteinheit kann zum Ausleiten eines Extraktionsprodukts aus einer Kapsel vorgesehen sein.

Der Injektor kann zum Einleiten einer Extraktionsflüssigkeit in die Portionenkapsel vorgesehen sein. Die Extraktionsflüssigkeit kann beispielsweise heisses Wasser sein.

Die Getränkezubereitungsmaschine kann beispielsweise eine solche sein, wie sie für die eingangs genannte WO 2010/118543 oben beschrieben ist. Insbesondere kann die Brühkammer die oben für die WO 2010/118543 beschriebenen Merkmale aufweisen.

In machen Ausführungsformen weist die Brühkammer mindestens ein mechanisches Kontrollelement zur Kontrolle einer Bewegung der Portionenkapsel in der Brühkammer auf. Es kann für ein Zusammenwirken mit dem mindestens einen Rampenelement vorgesehen sein. Insbesondere kann das mindestens eine mechanische Kontrollelement vorgesehen sein, eine Bewegung der Portionenkapsel parallel zu der Achse oder antiparallel zu der Achse relativ zu dem Injektor und/oder der Ausleiteinheit zu bewirken.

Das mechanische Kontrollelement kann beispielsweise ein Hebel sein.

Das mechanische Kontrollelement kann beispielsweise ein Rückholelement sein, mittels dessen die Portionenkapsel aus einer Brühposition in eine Auswurfposition gezogen werden kann; beispielsweise wie oben für die WO 2015/048914 beschrieben ist.

Das mechanische Kontrollelement kann insbesondere eine mechanische Vorspannung aufweisen, insbesondere senkrecht zur Achse, auf die Achse zu.

In machen Ausführungsformen ist die Brühkammer ausgebildet, die Portionenkapsel in der Brühkammer zu halten, und die Getränkezubereitungsmaschine weist einen Antrieb auf zum Bewirken einer Relativbewegung der gehaltenen Portionenkapsel parallel oder antiparallel zu der Achse, relativ zu dem Injektor und/oder der Ausleiteinheit. Und dabei kann die Brühkammer derart ausgebildet sein, dass sich das mindestens eine mechanische Kontrollelement während der Relativbewegung auf dem mindestens einen Rampenbereich entlangbewegt. Die Bewegung des mechanischen Kontrollemenentes kann durch das Rampenelement und insbesondere durch den Rampenbereich geführt sein.

Das Entlangbewegen des mechanischen Kontrollelementes (insbesondere des Wirkbereichs des mechanischen Kontrollelementes) auf dem Rampenbereich kann beispielsweise ein Entlanggleiten sein.

Beispielsweise können zwei einander bezüglich der Achse gegenüberliegende mechanische Kontrollelemente jeweils mit einem von zwei einander bezüglich einer die Achse enthaltenden Ebene gegenüberliegenden Rampenelementen zusammenwirken.

Das mindestens eine mechanische Kontrollelement (genauer: der Wirkbereich des mechanischen Kontrollelements) kann während und augrund der Bewegung auf dem Rampenbereich durch das Rampenelement nach aussen gedrückt werden (also in eine Richtung weg von der Achse).

Das Halten der Portionenkapsel kann beispielsweise durch Klemmen realisiert sein, beispielsweise in einem anderen mechanischen Kontrollelement, oder indem die Portionenkapsel durch ein anderes mechanisches Kontrollelement geführt und gegen die Schwerkraft gestützt ist. Es kann beispielsweise so realisiert sein, wie oben für die WO 2015/048914 beschrieben.

Der Antrieb kann ein elektrischer Antrieb sein, beispielsweise aufweisend einen Elektromotor, und/oder ein manuell betätigbarer Antrieb sein.

In machen Ausführungsformen weist das mechanische Kontrollelement einen Wirkbereich auf, und die Brühkammer ist derart ausgebildet, dass bei einer durch den Antrieb bewirkten Relativbewegung, bei der sich das mechanische Kontrollelement relativ zu der gehaltenen Portionenkapsel parallel zu der Achse bewegt, der Wirkbereich des mechanischen Kontrollelements mit einer mechanischen Vorspannung aussen gegen die Aussenwand drückt und im Verlauf der Relativbewegung, sich auf dem Rampenbereich entlangbewegend, zunehmend weiter weg von der Achse gedrückt wird, insbesondere kontinuiertlich oder diskontinuierlich zunehmend weiter weg von der Achse gedrückt wird.

Auf diese Weise kann sich der Achsabstand des Wirkbereichs kontinuierlich oder diskontinuierlich vergrössern - aufgrund des Zusammenwirkens von mechanischem Kontrollelement und Rampenelement.

Dadurch kann sich eine zunehmende mechanischen Spannung des mechanischen Kontrollelementes ausbilden (mit einer nach innen gerichteten Komponente, also mit einer Komponente in Richtung auf die Achse zu). Dadurch kann ein Kraftaufwand reduziert werden, der benötigt wird, um das mechanische Kontrollelement über den Kapselkragen zu bewegen - weil die Seitenwand der Portionenkapsel durch das mechanische Kontrollelement verformt, nämlich (leicht) eingedrückt wird, so dass es nicht ganz so weit gegen die mechanische Spannung von der Achse weg gedrückt werden muss.

Alternativ oder zusätzlich wird der Kraftaufwand, der benötigt wird, um das mechanische Kontrollelement über den Kapselkragen zu bewegen, dadurch reduziert, dass das mechanische Kontrollelement keine so grosse Stufe mehr überwinden muss. Das mechanische Kontrollelement muss nur noch wenig nach aussen gedrückt werden, um schliesslich den Kapselkragen zu überwinden. Denn während des Entlangbewegens auf dem Rampenelement (genauer: auf dem Rampenbereich) wird das mechanische Kontrollelement bereits (immer weiter) nach aussen gedrückt.

Während des Entlangbewegens kann ein direkter mechanischer Kontakt zwischen dem Wirkbereich und der Aussenwand bzw. dem Rampenbereich des Rampenelements vorliegen.

Es kann vorgesehen sein, dass im weiteren Verlauf der Relativbewegung, insbesondere nach dem Entlangbewegen auf dem Rampenbereich, der Wirkbereich mit dem Kapselkragen in Kontakt kommt.

Weiter kann auch vorgesehen sein, dass sich im noch weiteren Verlauf der Relativbewegung (insbesondere nach einem In-Kontakt-Kommen des Wirkbereiches mit dem Kapselkragen) der Wirkbereich sich wieder auf die Achse zu bewegt. Dadurch kann sich der Achsabstand des Wirkbereichs wieder verringern. Beispielsweise kann das mechanische Kontrollelement dann ein einer Einrastposition einrasten, zum Beispiel um die Portionenkapsel danach, nach einer Richtungsumkehr, entgegen der Achsenrichtung zu bewegen und, zum Beispiel, von einer Brühposition in eine Auswurfposition zu bewegen.

Das Verfahren zum Betreiben einer Getränkezubereitungsmaschine kann die folgenden Schritte aufweisen, wobei die Getränkezubereitungsmaschine eine Brühkammer mit mindestens einem mechanischen Kontrollelement zur Kontrolle von Bewegungen einer Portionenkapsel in der Brühkammer aufweist, und wobei das mechanische Kontrollelement einen Wirkbereich aufweist:
- Optional: Einbringen einer Portionenkapsel in die Brühkammer, wobei die Portionenkapsel eine Seitenwand mit mindestens einem Rampenelement aufweist, durch das mindestens ein Rampenbereich definiert ist, und durch die Portionenkapsel eine Achse definiert ist, die zentral durch die Portionenkapsel verlaufend ist;
- Halten der Portionenkapsel in der Brühkammer;
- Erzeugen einer Relativbewegung parallel zu der Achse zwischen dem mindestens einen mechanischen Kontrollelement und der Portionenkapsel, während welcher der Wirkbereich mit einer mechanischen Vorspannung aussen gegen die Seitenwand drückt und in deren Verlauf
   o der Wirkbereich, sich aussen auf dem Rampenbereich entlangbewegend, zunehmend weiter weg von der Achse gedrückt wird, insbesondere kontinuiertlich oder diskontinuierlich zunehmend weiter weg von der Achse gedrückt wird; und/oder
   o die Seitenwand durch das mechanische Kontrollelement zunehmend verformt wird, insbesondere nach innen verformt wird.

Beispielsweise kann die Portionenkapsel eine Portionenkapsel der hierein beschriebenen Art sein.

Das Verformen der Seitenwand kann ein Eindrücken der Seitenwand sein.

Das Verformen der Seitenwand kann, genauer, durch den Wirkbereich bewirkt werden.

Das Verformen der Seitenwand kann in dem Rampenbereich stattfinden.

Typischerweise treten im Verlauf der Relativbewegung beide Effekte auf: Der Wirkbereich wird nach aussen gedrückt, und die Seitenwand wird durch das mechanische Kontrollelement verformt; auch wenn einer der Effekte nur in sehr geringem Masse auftritt. In einem Beispiel ist die Distanz, um die der Wirkbereich nach aussen gedrückt wird, viel kleiner als die Distanz, um die die Seitenwand nach innen gedrückt wird, zum Beispiel im Falle eines sehr starren mechanischen Kontrollelements und einer relativ gut verformbaren Seitenwand. In Grenzfällen kann es aber sein, dass nur einer der zwei Effekte auftritt, also zum Beispiel der Wirkbereich nicht nach aussen gedrückt wird, zum Beispiel wenn das mechanische Kontrollelement extrem starr ist und die Seitenwand sehr leicht verformbar ist.

Die Getränkezubereitungsmaschine kann zum Beispiel eine Getränkezubereitungsmaschine sein, wie sie oben für die genannte WO 2010/118543 beschrieben ist.

Das Halten der Portionenkapsel in der Brühkammer kann beispielsweise durch mindestens ein zweites mechanisches Kontrollelement bewirkt werden.

Zum Beispiel kann das mindestens eine mechanische Kontrollelement in einem Injektor der Brühkammer integriert sein und das mindestens eine zweite mechanische Kontrollelement in einer Ausleiteinheit der Brühkammer integriert sein. Alternativ, in anderen Ausführungsformen, kann das mindestens eine mechanische Kontrollelement in einer Ausleiteinheit der Brühkammer integriert sein und das mindestens eine zweite mechanische Kontrollelement in einem Injektor der Brühkammer integriert sein.

Die Relativbewegung kann mittels eines Antriebes bewirkt werden, beispielsweise mittels eines Antriebs der hierin beschriebenen Art.

In manchen Ausführungsformen weist die Portionenkapsel einen Kapselkragen auf, und im weiteren Verlauf der Relativbewegung kommt der Wirkbereich mit dem Kapselkragen in Kontakt. Dies kann nach dem Entlangbewegen auf dem Rampenbereich der Fall sein.

In manchen Ausführungsformen bewegt sich der Wirkbereich im noch weiteren Verlauf der Relativbewegung wieder auf die Achse zu. Entsprechend verringert sich dann der Achsabstand des Wirkbereichs wieder.

Danach wiederum kann, in manchen Ausführungsformen, das mindestens eine mechanische Kontrollelement in einer Einrastposition einrasten.

Eine Portionskapsel der hierin beschriebenen Art kann zur Verringerung einer maximal aufzuwendenden (benötigten) Kraft für das Erzeugen einer Relativbewegung der Portionenkapsel in einer Brühkammer einer Getränkezubereitungsmaschine verwendet werden.

Die Relativbewegung kann, wie bereits beschrieben, eine Bewegung der Portionenkapsel relativ zu einem Teil der Brühkammer sein, insbesondere relativ zu einem mechanischen Kontrollelement der Brühkammer, wobei das mechanische Kontrollelement beispielsweise ein mechanisches Kontrollelement eines Injektors der Brühkammer - oder alternativ einer Ausleiteinheit der Brühkammer sein kann.

Die Erfindung umfasst Vorrichtungen mit Merkmalen, die den Merkmalen von beschriebenen Verfahren oder Verwendungen entsprechen und umgekehrt auch Verfahren und Verwendungen mit Merkmalen, die den Merkmalen von beschriebenen Vorrichtungen entsprechen.

Weitere Ausführungsformen und Vorteile gehen aus den abhängigen Patentansprüchen und den Figuren hervor.

Im folgenden wird der Erfindungsgegenstand anhand von Ausführungsbeispielen und den beiliegenden Zeichnungen näher erläutert. Es zeigen schematisch:
- Fig. 1: eine Portionenkapsel in einer Seitenansicht;
- Fig. 2: den Portionenkapselgrundkörper der Portionenkapsel aus Fig. 1, in perspektivischer Ansicht;
- Fig. 3A: einen Schnitt durch einen Portionenkapselgrundkörper kurz unterhalb des Kapselkragens, mit zwei einander bezüglich der Achse gegenüberliegend angeordnete Rampenelementen;
- Fig. 3B: einen Schnitt durch einen Portionenkapselgrundkörper kurz unterhalb des Kapselkragens, mit vier Rampenelementen, von denen jeweils zwei einander bezüglich der Achse gegenüberliegend angeordnet sind;
- Fig. 4A: einen Schnitt durch einen Portionenkapselgrundkörper kurz unterhalb des Kapselkragens, mit zwei Paaren von Rampenelementen, die zueinander spiegelbildlich angeordnet sind;
- Fig. 4B: einen Schnitt durch einen Portionenkapselgrundkörper kurz unterhalb des Kapselkragens, mit vier Paaren von Rampenelementen, von denen jeweils zwei zueinander spiegelbildlich angeordnet sind, und wobei die Rampenelemente jedes der Paare zueinander spiegelbildlich angeordnet sind;
- Figs. 5A-5J: stark schematisierte Schnitte, jeweils durch eine Hälfte eines Portionenkapselgrundkörpers;
- Figs. 6A-6C: stark schematisierte Veranschaulichungen einer Relativbewegung eines mechanischen Kontrollelementes und einer Portionenkapsel mit einem Rampenelement, geschnitten;
- Figs. 7A-7C: stark schematisierte Veranschaulichungen einer Relativbewegung eines mechanischen Kontrollelementes und einer Portionenkapsel, die kein Rampenelement aufweist, geschnitten;
- Fig. 8: stark schematisierte Darstellung einer Brühkammer mit eingelegter Portionenkapsel mit einem Rampenelement.

Für das Verständnis der Erfindung nicht wesentliche Teile sind zum Teil nicht dargestellt. Die beschriebenen Ausführungsbeispiele stehen beispielhaft für den Erfindungsgegenstand oder dienen seiner Erläuterung und haben keine beschränkende Wirkung.

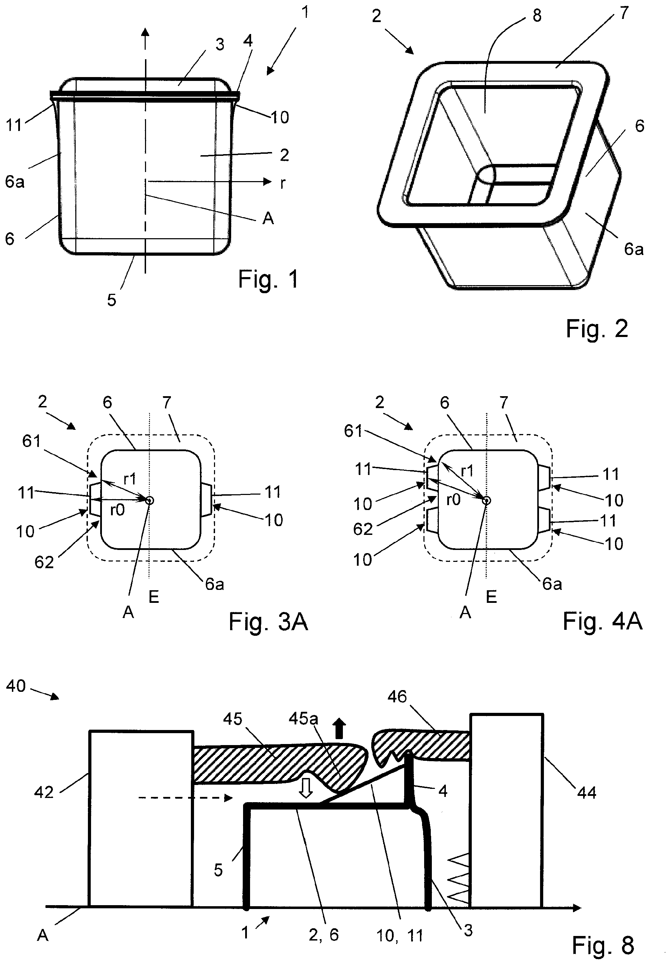

Fig. 1 zeigt eine Portionenkapsel 1 in einer Seitenansicht. Die Portionenkapsel 1 weist einen Portionenkapselgrundkörper 2 und einen nach aussen gewölbten Deckel 3 auf, die miteinander im Bereich eines umlaufenden, nach aussen auskragenden Kapselkragens 4 dichtend verbunden sind.

Fig. 2 zeigt den Portionenkapselgrundkörper 2 der Portionenkapsel 1 aus Fig. 1 in perspektivischer Ansicht.

Die Portionenkapsel 1 ist annähernd würfelförmig und weist eine zentrale Achse A auf, die von einem Bodenbereich 5 zum Deckel 3 hin gerichtet ist. Abstände senkrecht zur Achse A werden als Achsabstand r bezeichnet.

Der Bodenbereich 5 ist mit einer umlaufenden Seitenwand 6 verbunden, deren Aussenfläche mit 6a gekennzeichnet ist.

Der Portionenkapselgrundkörper 2 weist eine Öffnung 8 auf, die zum Beispiel dem Befüllen des Portionenkapselgrundkörpers 2 dienen kann, beispielsweise mit gemahlenem Kaffee. Die Öffnung 8 ist begrenzt von einem Kragenbereich 7 des Portionenkapselgrundkörpers 2. Dieser kann weiter auskragend sein als der Kapselkragen 4 der Portionenkapsel 1.

Weiter weist der Portionenkapselgrundkörper 2 zwei Rampenelemente 10 auf, die in Fig. 2 nicht sichtbar sind und jeweils einen Rampenbereich 11 aufweisen.

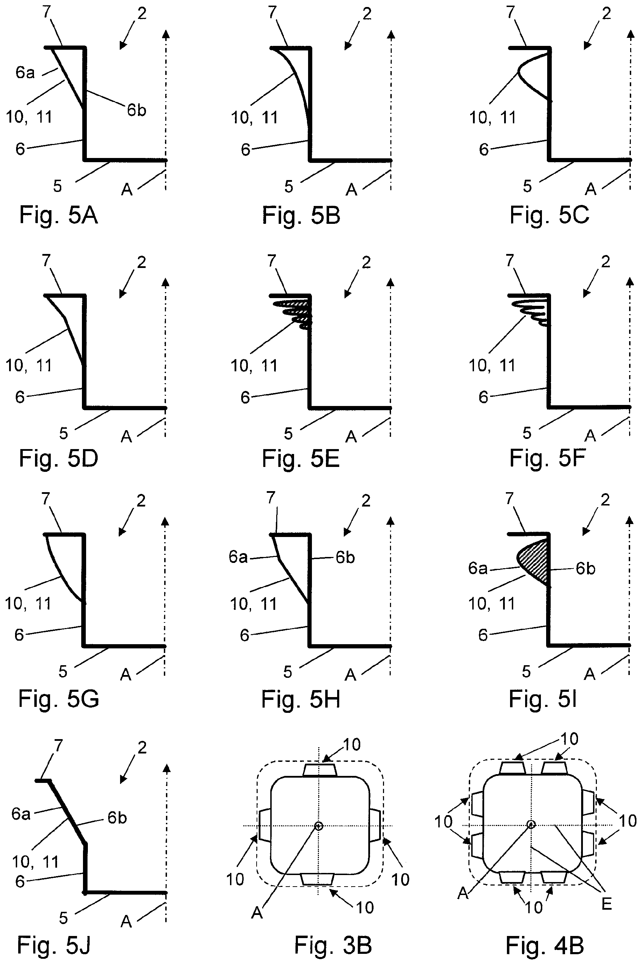

Figuren 3A, 3B, 4A, 4B zeigen jeweils einen Schnitt durch einen Portionenkapselgrundkörper 2 (oder gleichermassen durch eine entsprechende Portionenkapsel 1) kurz unterhalb des Kragenbereichs 7 (bzw. des Kapselkragens 4 - nicht explizit angeschrieben). Es sind verschiedene beispielhafte Anordnungen von Rampenelementen 10 gezeigt. Die Rampenelemente sind sektorielle Rampenelemente; sie erstrecken sich jeweils nur über einen Teil des Umfangs der Seitenwand.

Gestrichtelt dargestellt ist der Kragenbereich 7 (bzw. gleichermassen der Kapselkragen 4 - nicht explizit angeschrieben).

In der dargestellten Schnittebene knapp unterhalb des Kragenbereichs 7 bzw. Kapselkragens 4 werden die Rampenelemente 10 von dem Kragenbereich 7 wie auch von dem Kapselkragen 4 überragt (seitlich; nach aussen).

Alternativ zu dem dargestellten trapezförmigen Querschnitt können die Rampenelemente 10 auch andere Querschnitte aufweisen, zum Beispiel rechteckig oder gerundet.

Umfangsmässig beidseitig jedes Rampenelementes 10 weist die Seitenwand 6 Seitenwandbereiche 61, 62 auf, die an das jeweilige Rampenelement anschliessen und in denen die Aussenfläche 6 einen geringeren Achsabstand r1 hat als es die Aussenfläche im Rampenbereich 11 hat (Achsabstand r0). Und/oder der Kragenbereich 7 wie auch der Kapselkragen 4 überragt (seitlich; nach aussen) die Seitenwand 6 im Rampenbereich 11 weniger weit als in den Seitenwandbereichen 61, 62.

Wie dargestellt, besteht die Option, dass alle Rampenelemente gleichartig ausgebildet sind.

Zu den einzelnen Figuren.

Fig. 3A illustriert den Fall zweier bezüglich der Achse A gegenüberliegend angeordneter Rampenelemente 10. Fig. 3A kann zum Beispiel ein Schnitt durch die Portionenkapsel 1 bzw. durch den Portionenkapselgrundkörper 2 aus den Figuren 1 und 2 sein.

In Fig. 4A sind zwei Paare von Rampenelementen 10 vorgesehen, die zueinander spiegelbildlich angeordnet sind, bezüglich einer gestrichelt dargestellten Ebene E, die die Achse A enthält.

In Figuren 3A und 4A sind die Rampenelemente 10 spiegelbildlich angeordnet bezüglich der Ebene E.

Wenn auf die Rampenelemente 10 Druckkräfte ausgeübt werden, kann es von Vorteil sein, wenn diese sich gegenseitig aufheben. Dafür sind Ausführungsformen wie in Figuren 3A, 4A oder auch 3B, 4B gut geeignet.

In Fig. 3B weist der Portionenkapselgrundkörper 2 bzw. die Portionenkapsel 1 zwei Paare von Rampenelementen 10 auf, die zueinander spiegelbildlich angeordnet sind, bezüglich gestrichelt dargestellter Ebenen E, die die Achse A enthalten.

In Fig. 4B weist der Portionenkapselgrundkörper 2 bzw. die Portionenkapsel 1 vier Paare von Rampenelementen 10 auf, von denen jeweils zwei zueinander spiegelbildlich angeordnet sind (Ebenen E), und die Rampenelemente 10 jedes der Paare sind zueinander spiegelbildlich angeordnet (Ebenen E).

Figuren 3B und 4B sind Beispiele dafür, dass - allgemein - die Rampenelemente 10 so angeordnet sein können, dass sie durch eine 90°-Rotation um die Achse A ineinander überführt werden. Das kann, in dem dargestellten Fall einer Portionskapsel 1 mit annähernd quadratischem Querschnitt (senkrecht zur Achse A), ein Einwerfen der Portionenkapsel 1 (in eine Getränkezubereitungsmaschine) vereinfachen, weil dann der Orientierung der Portionenkapsel 1 beim Einwerfen keine zusätzlichs Aufmerksamkeit aufgrund der Rampenemente 10 geschenkt werden muss gegenüber dem Fall, dass kein Rampenelement 10 vorgesehen wäre.

Die Figuren 5A bis 5J stellen stark schematisierte Schnitte dar, jeweils durch eine Hälfte eines Portionenkapselgrundkörpers 2, wobei die Schnittebene durch den Rampenbereich 11 eines Rampenelements 10 verläuft. Gleichermassen sind die Figuren Figuren 5A bis 5J als Schnitte durch eine Portionenkapsel 1 zu verstehen, wobei dann der Kragenbereich 7 als Kapselkragen 4 zu verstehen wäre und der Deckel 3 in der entsprechenden Figur nicht dargestellt ist.

Der Rampenbereich 11 kann (komplett) gerade verlaufend sein, wie beispielhaft in Fig. 5A und Fig. 5J dargestellt.

Der Rampenbereich 11 kann konkav verlaufend sein, wie beispielhaft in Fig. 5B und auch in Fig. 5D dargestellt.

Der Rampenbereich 11 kann als Wulst ausgeführt sein sein, insbesondere als gerunderete Wulst; wie beispielhaft in Fig. 5C dargestellt.

Der Rampenbereich 11 kann mehrstufig verlaufend sein, wie beispielhaft in Fig. 5D, 5E, 5F und 5H dargestellt. Dabei können die einzelnen Stufen jeweils gerade sein, wie zum Beispiel in Figuren 5D, 5H dargestellt, oder auch gekrümmt (zum Beispiel: Figuren 5E, 5F).

Der Rampenbereich 11 kann konvex verlaufend sein, wie beispielhaft in Fig. 5C, 5G, 5H und auch in Fig. 5I dargestellt.

Die Aussenfläche 6a im Rampenbereich 11 kann einen Achsabstand r aufweisen, der (parallel zur Achse A) kontinuierlich zunehmend ist, wie beispielhaft in Fig. 5A, 5B, 5D, 5G, 5H, 5J dargestellt.

Die Aussenfläche 6a Rampenbereich 11 kann einen Achsabstand r aufweisen, der diskontinuierlich zunehmend ist, wie beispielhaft in Fig. 5E, 5F dargestellt.

Das Rampenelement 10 kann bis direkt an den Kapselkragen 4 bzw. bis an den Kragenbereich 7 erstreckt sein, wie beispielhaft in Fig. 5B, 5D, 5G, 5H, 5J dargestellt.

Das Rampenelement 10, insbesondere der Rampenbereich 11 kann einen maximalen Achsabstand r aufweisen, der gleich gross ist wie der dortige maximale Achsabstand des Kragenbereichs 7 bzw. des Kapselkragens 4, wie beispielhaft in Figs. 5B, 5D, 5F, 5G, 5H.

Das Rampenelement 10, insbesondere der Rampenbereich 11 kann einen maximalen Achsabstand r aufweisen, der kleiner ist als der dortige maximale Achsabstand des Kragenbereichs 7 bzw. des Kapselkragens 4, wie beispielhaft in Figs. 5A, 5C, 5E, 5F, 5I, 5J.

Das Rampenelement 10, insbesondere der Rampenbereich 11 kann einen Abstand vom Kapselkragen 4 bzw. vom Kragenbereich 7 haben, wie beispielhaft in Fig. 5C, 5E, 5F,5I dargestellt. Dieser (axiale) Abstand kann beispielsweise weniger als 20%, insbesondere weniger als 10% der axialen Erstreckung der Seitenwand 6, insbesondere des Rampenbereichs 10 betragen, wie beispielhaft in Fig. 5C, 5E, 5F,5I dargestellt.

Das Rampenelement 10 kann sich über nur einen Teil der axialen Erstreckung der Seitenwand 6 erstrecken, wie beispielhaft in Figuren 5A bis 5J dargestellt.

Der Portionenkapselgrundkörper 2 kann im Bereich des Rampenelementes 10 einen innenliegenden Seitenwandteil aufweisen, wie beispielhaft in Figuren 5A, 5B, 5C, 5D, 5F, 5G, 5H dargestellt. In diesen Fällen wird im Bereich des Rampenelementes 10 eine Innenfläche 6b der Seitenwand nicht durch das Rampenelement 10 gebildet, sondern durch das genannten Seitenwandteil.

Im Bereich des Rampenelementes 10 kann durch das Rampenelement 10 sowohl die Aussenfläche 6a als auch die Innenfläche 6b der Seitenwand 6 gebildet sein, wie beispielhaft in Figuren 5E, 5I, 5J dargestellt.

Der Portionenkapselgrundkörper 2 kann im Bereich des Rampenelementes 10 verdickt sein, wie beispielhaft in Figuren 5E und 5I dargestelt.

Der Portionenkapselgrundkörper 2 kann im Bereich des Rampenelementes 10 dieselbe Seitenwandstärke haben, wie in angrenzenden Seitenwandbereichen, wie beispielhaft in Figur 5J dargestellt.

Das Rampenelement 10 kann durch dasselbe Material gebildet sein wie andere Teile des Portionenkapselgrundkörpers 2, insbesondere als der Rest des Portionenkapselgrundkörpers 2. Das kann, als Option, für jede der beschriebenen Ausführungsformen gelten.

Das Rampenelement 10 kann durch ein anderes Material gebildet sein als andere Teile des Portionenkapselgrundkörpers 2 (zum Beispiel als der Rest des Portionenkapselgrundkörpers 2). Das kann, als Option, für jede der beschriebenen Ausführungsformen gelten.

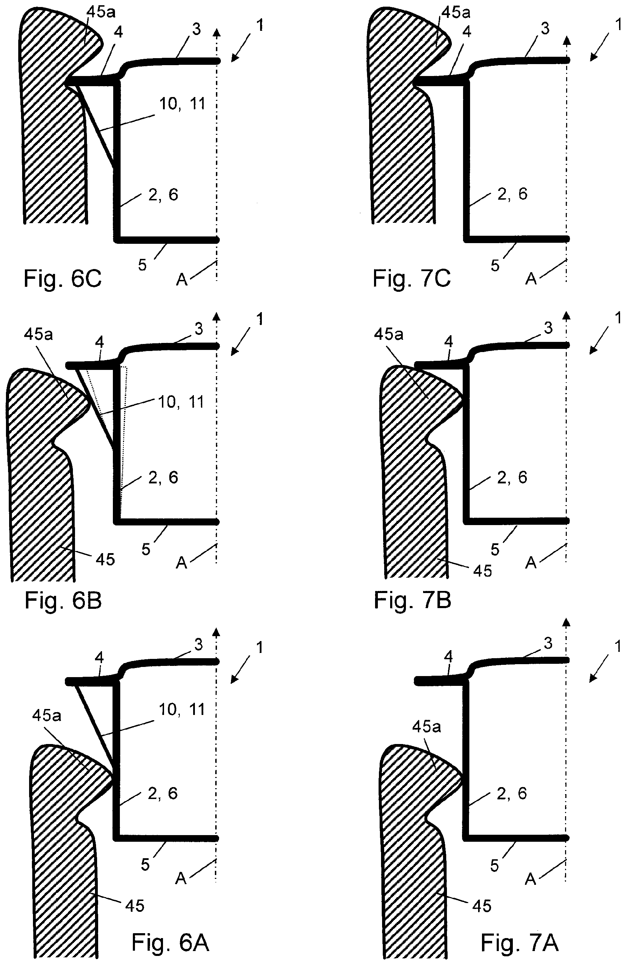

Beispielsweise kann das Material, aus dem das Rampenelement 10 gebildet ist, ein leichter verformbares Material sein, wobei das Material insbesondere resilient sein kann. Solche Ausführungsformen können insbesondere vorteilhaft sein für Ausführungsformen, in denen der Achsabstand r der Aussenfläche 6a entlang der Achsenrichtung diskontinuierlich zunehmend ist, wie beispielsweise in Figuren 5E, 5F. Figuren 6A-6C zeigen stark schematisierte Veranschaulichungen einer Relativbewegung eines mechanischen Kontrollelementes 45 mit einem Wirkbereich 45a und einer Portionenkapsel 1 mit einem Rampenelement 10, geschnitten.

Analog zeigen Figuren 7A-7C eine solche Bewegung für den Fall, dass die Portionenkapsel 1 kein Rampenelement 10 aufweist.

In den Figuren 6A bis 6C und 7A bis 7C ist eine Portionenkapsel 1 dargestellt, die einen Portionenkapselgrundkörper 2 aufweist, der dem aus Fig. 5A entspricht. Ebensogut kann ein anders ausgebildeter Portionenkapselgrundkörper 2 verwendet werden, zum Beispiel einer der in Fig. 5B bis 5J dargestellten oder auch andere hierin beschriebene.

Im Laufe der Relativbewegung wird in dem dargestellten Beispiel der Wirkbereich 45a bezüglich seiner axialen Position von einer Seite des Kapselkragens 4 (Grundkörperseite) auf die andere Seite des Kapselkragens 4 (Deckelseite) bewegt - also parallel zur Achse A (und nicht antiparallel zur Achse A). Figuren 6A, 7A zeigen eine anfängliche Position. Der Wirkbereich 45a des mechanischen Kontrollelementes 45 drückt, mit einer mechanschen Vorspannung, aussen gegen die Seitenwand 6 - in einem (axialen) Bereich ohne Rampenelement 10.

In Fig. 6B ist der Wirkbereich 45a in direktem mechanischen Kontakt mit dem Rampenbereich 11. Es ergibt sich mindestens einer von zwei Effekten. Einerseits wird der Wirkbereich 45a weiter nach aussen gedrückt als im Fall ohne Rampenelement (Fig. 7B). Und andererseits wird die Seitenwand 6 durch das mechanische Kontrollelement 45, genauer durch den Wirkbereich 45, eingedrückt (nach innen verformt). In Fig. 6B ist mit gepunkteten Linien angedeutet, dass die Seitenwand 6 - zumindest im Bereich des Rampenbereichs 11 - aufgrund der nach innen gerichteten Kraft, die das mechanische Kontrollelement 45 auf die Portionenkapsel 1 (genauer: auf die Seitenwand 6) ausübt, verformt wird.

Im weiteren Verlauf der Relativbewegung überspringt der Wirkbereich 45a in beiden Fällen den Kapselkragen 45, allerdings muss im Falle ohne Rampenelement (Figuren 7A bis 7C) innerhalb einer relativ kurzen axialen Strecke eine relativ hohe Kraft aufgewendet werden, um auf dieser Strecke den Wirkbereich 45a des mechanischen Kontrollelementes 45 so weit nach aussen zu drücken, wie es erforderlich ist. Das erfordert einen hohen Krafteinsatz für den Antrieb, sei dies eine Elektromotor, oder sei es ein manuell bedienter Antrieb. Mit einem Rampenelement 10 hingegen (Figuren 6A bis 6C), ist die maximal notwendige Kraft deutlich geringer, weil schon während des Entlangbewegens auf dem Rampenbereich 11 der Wirkbereich 45a immer weiter nach aussen gedrückt wird und/oder die Seitenwand 6 immer weiter eingedrückt wird, so dass beim zum Überwinden des Kapselkragens 4 keine so hohe Kraft mehr aufgewendet werden muss.

Durch Vorsehen des Rampenelementes 10 kann also eine Verringerung der maximal aufzuwendenden Kraft für das Durchführen der Relativbewegung bewirkt werden.

Figuren 6C, 7C zeigen einen Endzustand der Relativbewegung, der nach der Überwindung des Kapselkragens 4 liegt, und in dem der Achsabstand r des Wirkbereichs 45a schon wieder verringert ist; auch kann die Verformung der Seitenwand 6 nun wieder kleiner oder gegebenenfalls ganz aufgehoben sein. In dieser Position ist das mechanische Kontrollelement 45 am Kapselkragen eingerastet. Aufgrund der Form des Wirkbereiches 45a, nämlich aufweisend eine Fläche, die in eine Richtung mit einer Komponente antiparallel zur Achsenrichtung zeigt, kann - nach einer Richtungsumkehr (gegenüber der vorher beschriebenen Relativbewegung) - die Portionenkapsel 1 mittels des mechanischen Kontrollelementes 45, genauer: mittels der genannten Fläche, aufgrund derer der Wirkbereich 45 als ein Rückzugshaken wirken kann, zurückgezogen werden (in eine Richtung antiparallel zur Achsenrichtung).

Fig. 8 zeigt eine stark schematisierte Darstellung einer Brühkammer 8 mit eingelegter Portionenkapsel 1 mit Rampenelement 10. Die Brühkammer weist einen Injektor 42 auf sowie eine Ausleiteinheit 44. Mit dem Injektor 42 ist ein mechanisches Kontrollelement 45 verbunden, das mit dem oben beschriebenen identisch sein kann. Mit der Ausleiteinheit 44 ist ein zweites mechanisches Kontrollelement 46 verbunden, durch das die Portionenkapsel 1 gehalten ist. Die in Fig. 8 dargestellte Situation kann dem Zustand entsprechen, wie er in Fig. 6B dargestellt ist, wobei hier keine Verformung der Seitenwand 6 vorliegt oder eine solche in Fig. 8 zumindest nicht dargstellt ist.

Der gestrichelte Pfeil symbolisiert, dass sich der Injektor 42 zusammen mit dem mechanischen Kontrollelement 45 parallel zur Achsenrichtung relativ zur Portionenkapsel 1 (und zur Ausleiteinheit 44) bewegt.

Der offene Pfeil symbolisiert, dass durch das mechanische Kontrollelement 45 nach innen zeigende Kräfte auf die Aussenfläche 6a der Portionenkapsel 1 ausgeübt werden, insbesondere auf den Rampenbereich.

Der gefüllte Pfeil symbolisiert, dass der Wirkbereich 45a aufgrund der Relativbewegung und wegen des Rampenelementes 10 optional nach aussen gedrückt wird.

Wie aus dem obigen klar wird, kann es das Vorsehen der beschriebenen Rampenelemente 10 ermöglichen, insbesondere bei Nutzung eines elektrisch betriebenen Motors bzw. Antriebs für die Kontrolle der Bewegungen in der Brüheinheit 40, Energie zu sparen und/oder einen Antrieb einzusetzen, der auf die Erzeugung kleinerer Maximalkräfte begrenzt ist als es für dieselbe Brüheinheit mit derselben Kapsel, aber ohne Rampenelement, nötig wäre. Und wenn die Bewegungen in der Brühkammer manuell abgetrieben werden, kann ein Nutzer die Getränkezubereitungsmaschine mit weniger Kraftaufwand bedienen und/oder hat ein Nutzer ein angenehmeres Nutzererlebnis, zum Beispiel weil es bei der Durchführung der Bewegung weniger ruckelt und/oder sich geschmeidiger anfühlt.

## Patentansprüche

1. Portionenkapselgrundkörper (2), definierend eine gerichtete Achse (A) und befüllbar mit einem Extraktionsgut, aufweisend
- einen Bodenbereich (5);
- eine an den Bodenbereich (5) anschliessende umlaufende Seitenwand (6), die eine Aussenfläche (6a) aufweist; und
- einen an die Seitenwand (6) anschliessenden umlaufenden Kragenbereich (7), durch den eine Öffnung (8) definiert ist;
wobei die Achse (A) zentral durch den Bodenbereich (5) und durch die Öffnung (8) verlaufend ist und eine von dem Bodenbereich (5) durch die Öffnung (8) zeigende Achsenrichtung definiert, und wobei ein senkrecht zur Achse (A) gemessener Abstand als Achsabstand (r) bezeichnet wird, wobei die Seitenwand (6) mindestens ein Rampenelement (10) aufweist, durch das mindestens ein Rampenbereich (11) definiert ist, in welchem der Achsabstand (r) der Aussenfläche (6a) entlang der Achsenrichtung zunehmend ist.

2. Portionenkapselgrundkörper (2) gemäss Anspruch 1, wobei der mindestens eine Rampenbereich (11) an einem Kragenbereich-seitigem Ende der Seitenwand (6) angeordnet ist, insbesondere wobei der mindestens eine Rampenbereich (11) an den Kragenbereich (7) angrenzend ist.

3. Portionenkapselgrundkörper (2) gemäss einem der Ansprüche 1 bis 2, wobei sich das mindestens eine Rampenelement (10) nur über einen Teil eines Umfangs der Seitenwand (6) erstreckt.

4. Portionenkapselgrundkörper (2) gemäss einem der Ansprüche 1 bis 3, wobei die Seitenwand (6) zwei an das mindestens eine Rampenelement (10) umfangsmässig anschliessende Seitenwandbereiche (61, 62) aufweist, und wobei das mindestens eine Rampenelement (11) gegenüber den beiden Seitenwandbereichen (61, 62) nach aussen hervorstehend ist.

5. Portionenkapselgrundkörper (2) gemäss einem der Ansprüche 1 bis 4, wobei die Seitenwand (6) mindestens ein erstes und ein zweites Rampenelement (10) aufweist, die einander bezüglich der Achse (A) gegenüberliegend angeordnet sind, insbesondere wobei der Rampenbereich (11) des zweiten Rampenelements (10) gleichartig ausgebildet ist wie der Rampenbereich (11) des ersten Rampenelements (10).

6. Portionenkapselgrundkörper (2) gemäss einem der Ansprüche 1 bis 5, wobei die Seitenwand (6) mindestens zwei Paare von Rampenelementen (10) aufweist, wobei das erste Paar gegenüber dem zweiten Paar spiegelbildlich angeordnet ist bezüglich einer Ebene (E), die die Achse (A) enthält, insbesondere wobei der Rampenbereich (11) eines ersten Rampenelements (10) des zweiten Paares gleichartig ausgebildet ist wie der Rampenbereich (11) eines ersten Rampenelements (10) des zweiten Paares und der Rampenbereich (11) eines zweiten Rampenelements (10) des zweiten Paares gleichartig ausgebildet ist wie der Rampenbereich (11) eines zweiten Rampenelements (10) des ersten Paares.

7. Portionenkapselgrundkörper (2) gemäss einem der Ansprüche 1 bis 6, wobei für jede Richtung senkrecht zur Achse (A) das mindestens eine Rampenelement (10) von dem Kragenbereich (7) nach aussen überragt wird oder maximal gleich weit nach aussen ragend ist wie der Kragenbereich (7).

8. Portionenkapsel (1) aufweisend einen mit einem Extraktionsgut befüllten Portionenkapselgrundkörper (2) gemäss einem der Ansprüche 1 bis 7 sowie einen mit dem Portionenkapselgrundkörper (2) im Kragenbereich (7) dichtend verbundenen Deckel (3).

9. Portionenkapsel (1) gemäss Anspruch 8, aufweisend einen Kapselkragen (4), wobei, für jede Richtung senkrecht zur Achse (A), das mindestens eine Rampenelement (10) von dem Kapselkragen (4) nach aussen überragt wird oder maximal gleich weit nach aussen ragend ist wie der Kapselkragen (4).

10. Kombination aufweisend eine Portionenkapsel (1) gemäss einem der Ansprüche 8 bis 9 sowie eine Getränkezubereitungsmaschine zur Aufnahme der Portionenkapsel (1), wobei die Getränkezubereitungsmaschine eine Brühkammer (40) mit einem Injektor (42) und einer Ausleiteinheit (44) aufweist.

11. Kombination gemäss Anspruch 12, wobei die Brühkammer (40) mindestens ein mechanisches Kontrollelement (45; 46) zur Kontrolle einer Bewegung der Portionenkapsel (1) in der Brühkammer (40) aufweist, das für ein Zusammenwirken mit dem mindestens einen Rampenelement (10) vorgesehen ist, insbesondere wobei das mindestens eine mechanische Kontrollelement (45) vorgesehen ist, eine Bewegung der Portionenkapsel (1) parallel zu der Achse (A) oder antiparallel zu der Achse (A) relativ zu dem Injektor (42) und/oder der Ausleiteinheit (44) zu bewirken.

12. Kombination gemäss Anspruch 11, wobei die Brühkammer (40) ausgebildet ist, die Portionenkapsel (1) in der Brühkammer zu halten, und einen Antrieb aufweist zum Bewirken einer Relativbewegung der gehaltenen Portionenkapsel (1) parallel oder antiparallel zu der Achse (A), relativ zu dem Injektor (42) und/oder der Ausleiteinheit (44), und wobei die Brühkammer (40) derart ausgebildet ist, dass sich das mindestens eine mechanische Kontrollelement (45) während der Relativbewegung auf dem mindestens einen Rampenbereich (11) entlangbewegt.

13. Kombination gemäss Anspruch 12, wobei das mechanische Kontrollelement (45) einen Wirkbereich (45a) aufweist und die Brühkammer (40) derart ausgebildet ist, dass bei einer durch den Antrieb bewirkten Relativbewegung, bei der sich das mechanische Kontrollelement (45) relativ zu der gehaltenen Portionenkapsel (1) parallel zu der Achse (A) bewegt, der Wirkbereich (45a) des mechanischen Kontrollelements (45) mit einer mechanischen Vorspannung aussen gegen die Aussenwand (6a) drückt und im Verlauf der Relativbewegung, sich auf dem Rampenbereich (11) entlangbewegend, zunehmend weiter weg von der Achse (A) gedrückt wird.

14. Verfahren zum Betreiben einer Getränkezubereitungsmaschine, die eine Brühkammer (40) mit mindestens einem mechanischen Kontrollelement (45, 46) zur Kontrolle von Bewegungen einer Portionenkapsel (1) in der Brühkammer (40) aufweist, wobei das mechanische Kontrollelement (45) einen Wirkbereich (45a) aufweist, wobei das Verfahren die folgenden Schritte aufweist:
- Einbringen einer Portionenkapsel (1) in die Brühkammer (40), wobei die Portionenkapsel (1) eine Seitenwand (6) mit mindestens einem Rampenelement (10) aufweist, durch das mindestens ein Rampenbereich (11) definiert ist, und durch die Portionenkapsel (1) eine Achse (A) definiert ist, die zentral durch die Portionenkapsel (1) verlaufend ist;
- Halten der Portionenkapsel (1) in der Brühkammer (40);
- Erzeugen einer Relativbewegung parallel zu der Achse (A) zwischen dem mindestens einen mechanischen Kontrollelement (45) und der Portionenkapsel (1), während welcher der Wirkbereich (45a) mit einer mechanischen Vorspannung aussen gegen die Seitenwand (6) drückt und in deren Verlauf
o der Wirkbereich (45a), sich aussen auf dem Rampenbereich (11) entlangbewegend, zunehmend weiter weg von der Achse (A) gedrückt wird; und/oder
o die Seitenwand (6) durch das mechanische Kontrollelement (45) zunehmend verformt wird;
insbesondere, wobei die Portionenkapsel (1) eine Portionenkapsel (1) gemäss einem der Ansprüche 1 bis 7 ist.

15. Verfahren gemäss Anspruch 14, wobei die Portionenkapsel (1) einen Kapselkragen (4) aufweist, und wobei im weiteren Verlauf der Relativbewegung der Wirkbereich (45) mit dem Kapselkragen (4) in Kontakt kommt.

16. Verfahren gemäss Anspruch 15, wobei im noch weiteren Verlauf der Relativbewegung der Wirkbereich (45a) sich wieder auf die Achse (A) zu bewegt.

17. Verwendung einer Portionskapsel (1) gemäss einem der Ansprüche 8 bis 9 zur Verringerung einer maximal aufzuwendenden Kraft für das Erzeugen einer Relativbewegung der Portionenkapsel (1) in einer Brühkammer (40) einer Getränkezubereitungsmaschine.
